# EUROPÄISCHE PATENTSCHRIFT

(11) **EP 0 770 822 B1**
(45) Veröffentlichungstag und Bekanntmachung des Hinweises auf die Patenterteilung: **14.05.2003**
(21) Anmeldenummer: 96117013.1
(22) Anmeldetag: 23.10.1996
(51) Int. Cl.: F23G 5/12, F23G 5/02, F23K 3/02, F23L 7/00

(54) **Verfahren zur thermischen Behandlung feinkörniger Schüttgüter**
Method for thermal treatment of fine-grained bulk materials
Procédé pour le traitement thermique des matières pulvérulentes en vrac

(30) Priorität: 26.10.1995 DE 19539932
(43) Veröffentlichungstag der Anmeldung: 02.05.1997
(73) Patentinhaber: Linde AG, 65189 Wiesbaden (DE)
(72) Erfinder: Lissack, Wilfried, Dipl.-Ing., 82049 Pullach (DE); Schöne, Holger, 85579 Neubiberg (DE); Müller, Frank-Michael, Dr.-Ing., 90473 Nürnberg (DE); Rückel, Hans-Georg, 90765 Fürth (DE); Hopf, Norbert, Dipl.-Ing. (FH), 92353 Postbauer-Heng (DE)
(74) Vertreter: Kasseckert, Rainer

(56) Entgegenhaltungen:
- EP-A- 0 192 025
- EP-A- 0 770 821
- EP-A- 0 770 823
- WO-A-84/00600
- DE-A- 3 512 810
- DE-A- 4 021 362
- DE-A- 4 026 245
- DE-A- 4 225 483
- DE-C- 967 867

## Beschreibung

Die Erfindung betrifft ein Verfahren zur thermischen Behandlung feinkömiger Schüttgüter.

In verschiedenen Produktionsprozessen oder bei Abfallbehandlungsverfahren ist es vielfach notwendig, feinkörnige, kohäsive oder kohäsionslose, brennbare oder nicht brennbare Schüttgüter thermisch so zu behandeln, daß über die dann eintretende stoffliche Veränderung der Ausgangssubstanz eine Verwertung (z. B. als Ausgangsprodukt für nachgeschaltete Prozesse) oder eine Entsorgung (z. B. Verbrennung) erreicht wird. Üblicherweise werden die Schüttgüter hierzu in eine thermische Behandlungseinrichtung, z. B. einen Feuerungsraum einer Müllverbrennungsanlage oder eine Schmelzwanne eingebracht. Durch die Tatsache, daß die Schüttgüter oftmals in veränderlichen vergleichsweise kleinen Mengen und/oder mit unterschiedlichen Eigenschaften anfallen, wird ein kontinuierlicher Betrieb der thermischen Behandlungseinrichtung erschwert.

Die Druckschrift EP-A-0 192 025 offenbart ein Verfahren zur thermischen Behandlung feinkörniger Schüttgüter, beispielsweise zur Verbrennung von Kohlenstaub, bei dem die feinkörnigen Schüttgüter in eine Feuerung eingeblasen werden und somit ein Dichtstrom dispergierter Feststoffe genutzt wird.

Der vorliegenden Erfindung liegt die Aufgabe zugrunde, ein Verfahren zur thermischen Behandlung feinkörniger Schüttgüter sowie eine Vorrichtung zur Durchführung des Verfahrens zur Verfügung zu stellen, die auch eine wirtschaftliche thermische Behandlung von in veränderlichen und/oder kleinen Mengen und/oder mit unterschiedlichen Eigenschaften anfallenden Schüttgütern ermöglichen.

Diese Aufgabe wird erfindungsgemäß verfahrensseitig dadurch gelöst, daß aus den in veränderlichen Mengen und/oder mit unterschiedlichen Eigenschaften anfallenden Schüttgütern in einer Schüttgutdrosselvorrichtung mit den im folgenden Absatz beschriebenen Merkmalen (siehe auch Anspruch 1 der DE 42 25 483 C2) ein stetiger Dichtstrom dispergierter Feststoffe von weniger als 500 kg/h hergestellt wird, der einem mit technisch reinem Sauerstoff oder einem einen höheren Sauerstoffanteil als Luft aufweisenden Gas betriebenen Brenner und/oder einer mit technisch reinem Sauerstoff oder einem einen höheren Sauerstoffanteil als Luft aufweisenden Gas beaufschlagten Lanze zugeführt wird, wo die Feststoffe in ein durch die Art der behandelten Schüttgüter und durch die Wahl der in der Flamme des Brenners oder der Lanze eingestellten Reaktionsbedingungen vorbestimmtes verwertbares Produkt umgewandelt werden.

Dabei entspannt die Schüttgutdrosselvorrichtung die Schüttung aus einem Raum erhöhten Drucks in einen Raum geringeren Drucks, wobei die Schüttgutdrosselvorrichtung unterhalb des Raums erhöhten Drucks angeordnet ist und die Schüttgutdrosselvorrichtung mit einem Eintrittsflansch an den Raum erhöhten Druckes angekoppelt ist. Die Schüttgutdrosselvorrichtung besitzt einen steilen, konischen Schacht zur Sicherung des Schüttgutmassenflusses und eine den Schacht verschließbare sowie den Förderstrom regulierbare Dosierklappe. An der Dosierklappe ist eine von außen betätigbare Regulierschubstange befestigt Der konische Schacht mit Dosierklappe ist in dem Gehäuse montiert, das über den konisch auslaufenden Austrittsflansch die Schüttgutdrosselvorrichtung mit dem Raum niedrigen Druckes oder mit der Förderleitung verbindet. Durch die Wand des Gehäuses ist ein Fördergaseintrittsstutzen für den Transport des Schüttgutes und zur Spülung der beweglichen Teile der Dosierklappe eingesetzt.

Mit dem vorgeschlagenen Verfahren werden vergleichsweise kleine Dichtströme von vorteilhafterweise weniger als 500 kg/h, bevorzugt 100 - 400 kg/h, besonders bevorzugt von 100 - 200 kg/h, einer gezielten thermischen Behandlung in der Flamme des Brenners und/oder der Lanze zugeführt. Diese Dichtströme zeichnen sich dadurch aus, daß sie im wesentlichen aus dem zu fördemden Material bestehen und nicht oder nur unwesentlich mit einem anderen Medium, z.B. einem Fördermedium, verdünnt sind. Mit herkömmlichen Methoden ist es bisher nicht möglich, Dichtströme in derart geringen Mengen zuverlässig und kontinuierlich einer thermischen Verwertung zuzuführen. Bisher war man auf eine starke Verdünnung des zu fördernden Materials mit einem Fördermedium angewiesen. Derartige verdünnte Massenströme werden als Dünnströme bezeichnet. Bei Versorgung eines Brenners mit einem solchen Dünnstrom können jedoch nicht immer die für die stoffliche Umwandlung der Schüttgüter in ein vorbestimmtes verwertbares Produkt notwendigen Reaktionsbedingungen zuverlässig eingestellt werden.

Bei der vorliegenden Erfindung geht es nicht darum, lediglich ein neues Verfahren zur Verbrennung von Feststoffen bereitzustellen. Die vorliegende Patentanmeldung beschäftigt sich mit der Problematik, daß in verschiedenen Produktionsprozessen oder bei Abfallbehandlungsverfahren oftmals Schüttgüter in veränderlichen vergleichsweise kleinen Mengen und/oder mit unterschiedlichen Eigenschaften anfallen, so daß ein kontinuierlicher Betrieb herkömmlicher thermischer Behandlungseinrichtungen erschwert oder gar unmöglich gemacht wird. Mit der Erfindung wurde nun ein Verfahren gefunden, mit dem auch diese problematischen Schüttgüter einer stofflichen Verwertung zugeführt werden können.

Dies wird dadurch erreicht, daß aus den diskontinuierlich anfallenden und/oder mit unterschiedlichen Eigenschaften versehenen Schüttgütern ein stetiger Dichtstrom dispergierter Feststoffe von vorteilhafterweise weniger als 500 kg/h hergestellt wird und dieser vergleichsweise geringe kontinuierliche Dichtstrom einem mit reinem Sauerstoff oder einem einen höheren Sauerstoffanteil als Luft aufweisenden Gas betriebenen Brenner oder einer Lanze zugeführt wird. Dabei liegt der Erfindung die Erkenntnis zugrunde, daß derart geringe Dichtströme zuverlässig mittels einer Schüttgutdrosselvorrichtung gemäß den Merkmalen des Anspruchs 1 der DE 42 25 483 C2 einem kontinuierlich betriebenen Brenner oder einer Lanze zugeführt werden können. Erst durch die Verwendung dieser Schüttgutdrosselvorrichtung ist ein kontinuierlicher Betrieb eines Brenners oder einer Lanze bei derart geringen Dichtströmen der eingesetzten Feststoffe möglich. Aufgrund des hiermit erreichten kontinuierlichen Betriebs des Brenners oder der Lanze können in der Flamme des Brenners oder der Lanze die Reaktionsbedingungen so eingestellt werden, daß die Schüttgüter in ein durch die Art der behandelten Schüttgüter und durch die Wahl der in der Flamme eingestellten Reaktionsbedingungen vorbestimmtes verwertbares Produkt umgewandelt werden, mindestens jedoch sicher entsorgt werden.

Dabei können die Feststoffe kohäsiv oder kohäsionslos sein. Die Schüttgutdrosselvorrichtung sorgt immer für eine stetige Zufuhr der Schuttgüter. Da die Schüttgutdrosselvorrichtung dem Brenner und/oder der Lanze eine Dispersion der Schüttgüter zur Verfügung stellt, wird zudem die Reaktionsfähigkeit der Schüttgüter in der Flamme erhöht. Darüber hinaus werden durch den Einsatz eines mit Sauerstoff oder einem sauerstoffangereicherten Gas betriebenen Brenners und/oder einer Sauerstofflanze ausreichend hohe Temperaturen für eine wirtschaftliche Entsorgung und/oder Veränderung der Schüttgüter erreicht. Außerdem bewirkt die Verwendung von Sauerstoff oder einem sauerstoffangereicherten Gas eine Verringerung der Abgasmenge, wodurch die nachgeschaltete Abgasreinigung vereinfacht wird.

Vorzugsweise werden Schüttgüter mit einer Korngröße von weniger als 0,5 mm, insbesondere weniger als 0,1 mm, besonders bevorzugt mit weniger als 0,05 mm, verwendet. Diese Korngrößen haben sich für das System Schüttgutdrosselvorrichtung/Brenner als besonders günstig erwiesen.

Gemäß einer bevorzugten Ausführungsform der Erfindung werden die Schüttgüter oder zumindest Bestandteile der Schüttgüter in der Flamme des Brenners und/oder der Lanze vollständig verbrannt In bestimmten Anwendungsfällen kann es aber auch vorteilhaft sein, die Schüttgüter oder Bestandteile der Schüttgüter nur teilweise zu verbrennen, d. h. zu vergasen. Eine besonders bevorzugte Variante der Erfindung sieht vor, die Schüttgüter in der Flamme des Brenners und/oder der Lanze in eine schmelzflüssige Masse zu überführen, die anschließend abgekühlt und in ein festes, durch die Art der behandelten Schüttgüter und durch die Wahl der in der Flamme herrschenden Reaktionsbedingungen vorbestimmtes Produkt umgewandelt wird. Auf diese Weise können aus den Schüttgütem, die z. B. Schadstoffe enthalten können, verwertbare Produkte hergestellt werden.

Sämtliche schadstoffzerstörenden bzw. stoffumwandelnden und phasenändernden Reaktionen finden direkt in der Flamme statt. Durch den Einsatz von technischem Sauerstoff oder einem mit Sauerstoff angereicherten Gas, insbesondere sauerstoffangereicherter Luft, wird die Einhaltung der erforderlichen hohen Temperaturen gewährleistet. Der technische Sauerstoff wird zweckmäßigerweise in einem Luftzerleger oder einer Druckwechseladsorptionsanlage (PSA-Anlage) vor Ort hergestellt oder in einem Vorratstank bereit gestellt.

Vorzugsweise werden die Schüttgüter in der Flamme des Brenners und/oder der Lanze bei Temperaturen von ca. 1.250 bis ca. 1.500 °C und bei Umgebungsdruck behandelt.

Gemäß einer besonders bevorzugten Ausführungsform der Erfindung werden die Schüttgüter mit mindestens einem glas- und/oder basalt- und/oder keramikbildende Substanzen enthaltenden Zusatzstoff vermischt. Die Mischung wird anschließend direkt in die Flamme des Brenners und/oder der Lanze eingebracht. Als Zusatzstoffe sollten solche Substanzen verwendet werden, die selbständig brennbar sind und die gewünschten Produkteigenschaften gewährleisten. Dabei kommen vor allem Substanzen in Frage, die Silizium- und Aluminiumverbindungen enthalten. Besonders vorteilhaft sind heizwertarme Abfall- und/oder Reststoffe.

Die Schüttgüter werden zweckmäßigerweise durch Einblasen mittels eines Gases in die Flamme des Brenners und/oder der Lanze eingebracht. Vorzugsweise werden stickstoffarme Gase verwendet, wodurch eine zu starke Stickoxidbildung vermieden wird. Es kann auch ein Brenngas, insbesondere Erdgas, Propan oder Butan eingesetzt werden.

Gemäß einer Weiterbildung des Erfindungsgedankens wird verunreinigtes Gas z. B. aus Deponien oder schadstoffbelastete Abluft z. B. aus Tankanlagen zum Einblasen der Schüttgüter in die Flamme eingesetzt. Derartige Gase müssen ohnehin entsorgt werden, so daß durch eine gleichzeitige Behandlung mit den Schüttgütem zwei Entsorgungsprobleme bzw. bei Verwendung von zu entsorgenden Stoffen als Zusatzstoffen, wie z. B. Klärschlämmen oder Pyrolyserückständen, sogar drei Entsorgungsprobleme gleichzeitig gelöst werden können.

Für eine Behandlung mit dem erfindungsgemäßen Verfahren eignen sich besonders trockene Klärschlämme, trockene Pyrolyserückstände, unvollständig ausgebrannte Braunkohlenasche, Kunststoffstäube etc..

Eine Vorrichtung zur Durchführung des Verfahrens besitzt eine thermische Behandlungseinrichtung mit einer Zuführung für die Schüttgüter.

Bevorzugt ist die thermische Behandlungseinrichtung als Feststoffbrenner ausgebildet, der mit einer Versorgungseinrichtung für technisch reinen Sauerstoff oder ein einen größeren Sauerstoffanteil als Luft aufweisendes Gas in Verbindung steht, und die Zuführung für die Schüttgüter eine Schüttgutdrosselvorrichtung gemäß den Merkmalen des Anspruchs 1 der DE 42 25 483 C2 aufweist, nämlich daß die Schüttgutdrosselvorrichtung die Schüttung aus einem Raum erhöhten Drucks in einen Raum geringeren Drucks entspannt, wobei die Schüttgutdrosselvorrichtung unterhalb des Raums erhöhten Drucks angeordnet ist und die Schüttgutdrosselvorrichtung mit einem Eintrittsflansch an den Raum erhöhten Druckes angekoppelt ist, die Schüttgutdrosselvorrichtung einen steilen, konischen Schacht zur Sicherung des Schüttgutmassenflusses und eine den Schacht verschließbare sowie den Förderstrom regulierbare Dosierklappe besitzt, an der Dosierklappe eine von außen betätigbare Regulierschubstange befestigt ist, und der konische Schacht mit Dosierklappe in dem Gehäuse, das über den konisch auslaufenden Austrittsflansch die Schüttgutdrosselvorrichtung mit dem Raum niedrigen Druckes oder mit der Förderleitung verbindet, montiert ist und durch die Wand des Gehäuses ein Fördergaseintrittsstutzen für den Transport des Schüttgutes und zur Spülung der beweglichen Teile der Dosierklappe eingesetzt ist.

Beispielsweise mündet in die Zuführung für die Schüttgüter vorteilhaft eine mit einem Vorratsbehälter für einen heizwertarmen Abfall- oder Reststoff z. B. unvollständig ausgebrannte Braunkohlenasche, in Verbindung stehende Zuleitung.

Zweckmäßigerweise ist die Schüttgutdrosselvorrichtung dem Brenner unmittelbar vorgeschaltet, so daß der Austrittsflansch der Schüttgutdrosselvorrichtung direkt an den Brenner angeschlossen ist.

Das erfindungsgemäße Verfahren eignet sich zur Behandlung von allen denkbaren feinkörnigen Schüttgütern. Beispielsweise können schadstoffbelastete Stäube mit der Erfindung auf wirtschaftliche Weise entsorgt werden. Insbesondere bei diskontinuierlich und/oder in kleinen Mengen anfallenden Schüttgütem oder Schüttgütem mit unterschiedlichen Eigenschaften ist die Erfindung mit großem Erfolg anzuwenden. Die Erfindung eignet sich aber auch zur chemischen Umwandlung von Schüttgütern, die beispielsweise in der chemischen Industrie anfallen. Dabei kommt es nicht auf eine Entsorgung oder Verbrennung der Schüttgüter an, sondern auf die Durchführung thermisch induzierter Umwandlungsprozesse.

## Patentansprüche

1. Verfahren zur thermischen Behandlung feinkörniger Schüttgüter aus den in veränderlichen Mengen und/oder mit unterschiedlichen Eigenschaften anfallenden Schüttgütem einer Schüttgutdrosselvorrichtung, die unterhalb eines Raums erhöhten Druck angeordnet ist und mit einem Eintrittsflansch an einen Raum erhöhten Drucks angekoppelt ist und einen steilen, konischen Schacht zur Sicherung des Schüttgutmassenflusses und eine den Schacht verschließbare sowie den Förderstrom regulierbare Dosierklappe besitzt, an der eine von außen betätigbare Regulierschubstange befestigt ist, und der konische Schacht mit Dosierklappe in dem Gehäuse montiert ist, das über den konisch auslaufenden Austrittsflansch die Schüttgutdrosselvorrichtung mit dem Raum niedrigen Drucks oder mit der Förderleitung verbindet, und durch die Wand des Gehäuses ein Fördergas über einen Fördergaseintrittsstutzen für den Transport des Schüttgutes und zur Spülung der beweglichen Teile der Dosierklappe zugegeben wird, wobei die Schüttung durch die Schüttgutdrosselvorrichtung aus dem Raum erhöhten Drucks in den Raum geringeren Drucks entspannt wird und ein stetiger Dichtstrom dispergierter Feststoffe von weniger als 500 kg/h hergestellt wird, der einem mit technisch reinem Sauerstoff oder einem einen höheren Sauerstoffanteil als Luft aufweisenden Gas betriebenen Brenner und/oder einer mit technisch reinem Sauerstoff oder einem einen höheren Sauerstoffanteil als Luft aufweisenden Gas beaufschlagten Lanze zugeführt wird, wo die Feststoffe in ein durch die Art der behandelten Schüttgüter und durch die Wahl der in der Flamme des Brenners oder der Lanze eingestellten Reaktionsbedingungen vorbestimmtes verwertbares Produkt umgewandelt werden.

2. Verfahren nach Anspruch 1, **dadurch gekennzeichnet, daß** Schüttgüter mit einer Korngröße von weniger als 0,5 mm, vorzugsweise weniger als 0,1 mm, besonders bevorzugt weniger als 0,05 mm, verwendet werden.

3. Verfahren nach Anspruch 1 oder 2, **dadurch gekennzeichnet, daß** dem Brenner und/oder der Lanze kleine Dichtströme von 100 ∼ 400 kg/h stetig zugeführt werden.

4. Verfahren nach einem der Ansprüche 1 bis 3, **dadurch gekennzeichnet, daß** die Schüttgüter mit mindestens einem glas- und/oder basalt- und/oder keramikbildende Substanzen enthaltenden Zusatzstoff vermischt werden und die Mischung direkt in die Flamme des Brenners und/oder der Lanze eingebracht wird.

5. Verfahren nach Anspruch 4, **dadurch gekennzeichnet, daß** als Zusatzstoff ein heizwertarmer Abfall- oder Reststoff eingesetzt wird.

6. Verfahren nach einem der Ansprüche 1 bis 5, **dadurch gekennzeichnet, daß** die Schüttgüter mittels eines stickstoffarmen Gases in die Flamme des Brenners und/oder der Lanze eingebracht werden.

7. Verfahren nach einem der Ansprüche 1 bis 6, **dadurch gekennzeichnet, daß** die Schüttgüter mittels eines zu entsorgenden Gases in die Flamme des Brenners und/oder der Lanze eingebracht werden.

## Claims

1. Method for thermal treatment of fine-grained bulk materials from the bulk materials produced in varying quantities and/or with differing properties by a bulk material restrictor device, which is arranged underneath a chamber at elevated pressure and is coupled by an inlet flange to a chamber at elevated pressure and has a steep, conical shaft to ensure the mass flow of the bulk material and a metering flap which can close the shaft and regulate the feed flow, to which flap an externally actuable regulating push rod is fastened, and the conical shaft with the metering flap is mounted in the housing, which connects the bulk material restrictor device via the conically tapering outlet flange to a chamber at low pressure or to the feed line, and a feed gas is fed to the metering flap through the wall of the housing via a feed-gas inlet stub for the transport of the bulk material and for flushing the movable parts of the metering flap, the charge of bulk material being released by the bulk material restrictor device from the chamber at elevated pressure into the chamber at lower pressure and a constant dense flow of dispersed solids of less than 500 kg/h established, which is fed to a burner operating with technically pure oxygen or with a gas having a higher oxygen content than air and/or to a lance subjected to a technically pure oxygen or a gas having a higher oxygen content than air, where the solids are converted into a usable product predetermined by the type of treated bulk materials and by the choice of reaction conditions set in the flame of the burner or the lance.

2. Method according to Claim 1, **characterized in that** bulk materials with a grain size of less than 0.5 mm, preferably less than 0.1 mm, particularly preferably less than 0.05 mm, are used.

3. Method according to Claim 1 or 2, **characterized in that** small dense flows of 100 - 400 kg/h are constantly fed to the burner and/or the lance.

4. Method according to one of Claims 1 to 3, **characterized in that** the bulk materials are mixed with at least one additive containing glass- and/or basalt- and/or ceramic-forming substances and the mixture is introduced directly into the flame of the burner and/or the lance.

5. Method according to Claim 4, **characterized in that** a waste or residual substance of low calorific value is used as the additive.

6. Method according to one of Claims 1 to 5, **characterized in that** the bulk materials are introduced into the flame of the burner and/or the lance by means of a gas that is low in nitrogen.

7. Method according to one of Claims 1 to 6, **characterized in that** the bulk materials are introduced into the flame of the burner and/or the lance by means of a gas intended for disposal.

## Revendications

1. Procédé pour le traitement thermique des matières pulvérulentes en vrac hors des matières en vrac sortant en quantités variables et/ou avec des propriétés différentes d'un dispositif d'étranglement des matières en vrac, qui est disposé en dessous d'un espace sous pression accrue et qui est couplé par une bride d'entrée à un espace sous pression accrue et qui possède un puits conique abrupt pour garantir le flux massique de matières en vrac et un clapet de dosage fermant le puits et régulant le courant transporté, auquel est fixée une bielle de régulation actionnée de l'extérieur, et le puits conique avec le clapet de dosage est monté dans l'enceinte qui relie, par la bride de sortie se terminant en cône, le dispositif d'étranglement des matières en vrac avec un espace sous faible pression ou avec la conduite de transport, et un gaz propulseur est introduit à travers la paroi de l'enceinte par un tuyau d'entrée de gaz propulseur pour le transport de la matière en vrac et le balayage des pièces mobiles clapet de dosage, dans lequel la charge est détendue à travers le dispositif d'étranglement des matières en vrac depuis l'espace sous pression accrue vers l'espace sous plus faible pression et il s'établit un courant dense continu de substances solides dispersées de moins de 500 kg/h, qui est envoyé à un brûleur fonctionnant avec de l'oxygène techniquement pur ou avec un gaz présentant une teneur en oxygène supérieure à celle de l'air et/ou à une lance fonctionnant avec de l'oxygène techniquement pur ou avec un gaz présentant une teneur en oxygène supérieure à celle de l'air, où les substances solides sont converties en un produit récupérable prédéterminé par la nature des matières en vrac traitées et par le choix des conditions de réaction établies dans la flamme du brûleur ou de la lance.

2. Procédé suivant la revendication 1, **caractérisé en ce que** l'on utilise des matières en vrac avec une grosseur de grains de moins de 0,5 mm, de préférence de moins de 0,1 mm, et de préférence encore de moins de 0,05 mm.

3. Procédé suivant la revendication 1 ou 2, **caractérisé en ce que** l'on introduit en continu dans le brûleur et/ou dans la lance de petits courants denses de 100 - 400 kg/h.

4. Procédé suivant l'une quelconque des revendications 1 à 3, **caractérisé en ce que** les matières en vrac sont mélangées avec au moins une matière d'addition contenant des substances formant du verre et/ou du basalte et/ou de la céramique et **en ce que** l'on introduit le mélange directement dans la flamme du brûleur et/ou de la lance.

5. Procédé suivant la revendication 4, **caractérisé en ce que** l'on utilise comme matière d'addition des déchets ou des résidus à faible pouvoir calorifique.

6. Procédé suivant l'une quelconque des revendications 1 à 5, **caractérisé en ce que** les matières en vrac sont introduites dans la flamme du brûleur et/ou de la lance au moyen d'un gaz pauvre en azote.

7. Procédé suivant l'une quelconque des revendications 1 à 6, **caractérisé en ce que** les matières en vrac sont introduites dans la flamme du brûleur et/ou de la lance au moyen d'un gaz à éliminer.
